# EUROPEAN PATENT SPECIFICATION

(11) **EP 1 754 211 B1**
(45) Date of publication and mention of the grant of the patent: **08.08.2012**
(21) Application number: 05751131.3
(22) Date of filing: 10.06.2005
(51) Int. Cl.: G09F 23/00

(54) **PROMOTIONAL AND/OR ADVERTISING DEVICE WITH AUTOMATICALLY REMOTELY IDENTIFIABLE SHEET SUPPORT, PARTICULARLY FOR ADVERTISING AND PROMOTIONAL PURPOSES**
WERBE- UND/ODER ANZEIGEEINRICHTUNG MIT AUTOMATISCH FERNIDENTIFIZIERBAREM BLATT-SUPPORT, INSBESONDERE FÜR ANZEIGEN- UND WERBEZWECKE
DISPOSITIF DE PROMOTION ET/OU DE PUBLICITE A SUPPORT DE FEUILLES AUTOMATIQUEMENT IDENTIFIABLE A DISTANCE DESTINE EN PARTICULIER A DES FINS PUBLICITAIRES ET PROMOTIONNELLES

(30) Priority: 10.06.2004 IT MI20041159
(43) Date of publication of application: 21.02.2007
(73) Proprietor: Axen Technologies S.A., 2732 Luxembourg (LU)
(72) Inventor: PILLA, Giovanni, I-20136 Milano (IT); PILLA Riccardo, I-20136 Milano (IT)
(74) Representative: Ponzellini, Gianmarco
(86) International application number: PCT/IB2005/001631
(87) International publication number: WO 2005/122117

(56) References cited:
- EP-A- 1 369 842
- WO-A-02/25624
- WO-A-03/046686
- US-A1- 2003 105 667

## Description

The present invention relates to a promotional and/or advertising system equiped with an automatically remotely identifiable sheet card, made of paper material for example, in particular for advertising or promotional purposes.

It is known that a transponder is a device made up of an active read unit and at least one passive unit adapted to emit reply signals when requested by external pulses sent by the same active read unit in the form of radio waves, sound waves or others.

Each passive unit is identifiable by the read unit because the coded reply signals emitted therefrom contain specific information of their own that is different from that of another passive unit. Said information can be stored in a micro-memory disposed within a chip power supplied by suitable circuit elements, due to the effect induced by the radio-waves received by the passive unit through a micro-antenna and/or other.

In the case, instead, of an ultrasound transponder, said ultrasonic waves act on a component of the passive unit of the piezoelectric type capable of converting the mechanical energy of the incident sound vibrations into electric energy so as to reflect the received sound waves and suitably modify them to enable the same to be unequivocally identified.

Also known is use of paper material such as leaflets, cards, picture postcards, brochures, maps or other types of media to transmit advertising or promotional messages generally directed to increase the sale of goods or advertise services, commercial and recreational activities and the like.

Sometimes on the above mentioned paper media, identification codes are reproduced that enable prize wins, discount obtaining, participation in competitions, free admittance to given places or allow other types of advantages or facilities to be obtained. In this case the reading procedure of the codes printed on the paper media, in addition to involving the necessity to use suitably assigned staff, also'can give rise to many inconveniences and waste of time under some particular situations such as those where accidentally or intentionally the simultaneous presence of many persons in the same place occurs; all that may sometimes induce the owners of said paper media not to take advantage of the offers contained therein, thereby practically reducing the efficiency of the advertising or promotional messages.

It is known from document US 2003105667 a consumer messaging system which provides targeted messages to particular consumers or particular groups of consumers at a specific location. The targeted messages may be advertisements, promotions, events, or information/data relating to other products and/or services that are tailored to the particular consumer or group of consumers. The specific location may be a store or a place within a store. The consumer messaging system further provides the targeted messages to the consumer or groups of consumers when the consumer or group of consumers is at a point of decision. In more detail an establishment includes a consumer detection and Identification system that is in communication with a message targeting system. The message targeting system is in communication with a plurality of message providers. The consumer detection and/or identification system is operative to identify and/or obtain data regarding a consumer that is entering or has entered the establishment. The obtained identification and/or consumer data is provided to the message targeting system via a hardwired configuration or via a wireless configuration. The consumer is identified after entering the premises of an establishment; consumer data is obtained regarding the identified consumer; the obtained consumer data is provided to the message targeting system; the message targeting system processes the consumer data against a consumer characteristics pool to obtain an on-premises consumer pool characteristics; the message targeting system then selects a targeted message or targeted messages according to or based on the consumer pool characteristics; the targeted message or messages are sent to the message providers to be played thereon; finally the message system re-evaluates the targeted messages when or based on the occurrence of an event.

In addition it will be recognised that currently known and widespread transponders are all substantially arranged so as to enable traceability and identification of a given product. In other words, it is presently known to use transponder systems with a passive unit associated with a given product so that the code present in the passive unit can allow a predetermined number of significant data relating to the product itself to be identified; for instance, production data, data concerning the producer firm, the distributor, etc.

Under this situation, the technical task underlying the present invention is to devise an automatically proximity identifiable card for advertising and promotional purposes enabling the limits and drawbacks of traditional paper media of the type having identification codes allowing direct visual reading to be eliminated.

Within the scope of this technical task it is an important aim of the invention to conceive a promotional and/or advertising system provided with an automatically remotely identifiable card, in particular for advertising or promotional purposes, enabling recognition of the codes associated therewith to be facilitated thus avoiding inconveniences and waste of time and making the messages transmitted thereby more efficient and tempting.

It is a further aim of the invention to make available a transponder system of easy and simple implementation without requiring expensive procedures of identification and/or registration of the user and also without needing long procedures for data input as those required for tracing the products provided with the passive unit.

The technical task mentioned and the aims specified are substantially achieved by an automatically remotely identifiable card, in particular for advertising or promotional purposes, according to claim 1.

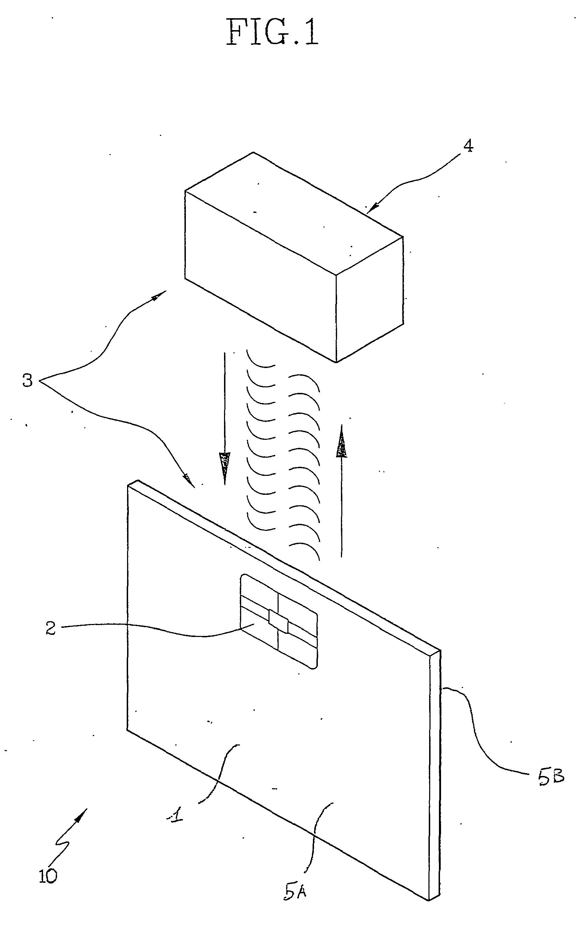

The description of same preferred but not exclusive embodiments of an automatically remotely identifiable paper medium in accordance with the invention is now given by way of non-limiting example, with reference to the accompanying drawing in which:
- the only figure diagrammatically shows a paper support and an active read unit of the information retransmitted by the same medium, in a perspective view.

With reference to the drawing, the promotional and/or advertising system in accordance with the invention is generally identified by reference numeral 10.

The device 10 first of all comprises a card 1 preferably of sheet material such as paper, plastic, imitation leather, leather, so that the production costs can be very reduced and the same is adapted to be personalised through printing or the like.

To this aim the paper medium 1 has two opposite faces 5a, 5b on at least one of which messages and/or graphic representations of promotional or advertising nature are printed.

According to an alternative solution (or in combination with the above mentioned prints) information for the user can be present such as maps or road maps or also promotion of cultural activities of different nature. These supports therefore can be in the form of leaflets, cards, invitations, tickets, brochures, maps, postcards or similar products.

Obviously the paper medium can reproduce indications about the fact that the same will enable prizes to be won, professional information to be given or still others, due to the passive chip contained in the leaflet itself.

Card 1 will generally be of personal use and in particular designed to be carried and used by a single owner. In other words card will generally be intended for private use and designed to a single person and will not be of public use as it can be the use of a shopping trolley in a supermarket, a store, or the like.

At all events card 1 will be adapted for transportation by the owner without giving rise to bulkiness or trouble problems, as it can be stowed in a pocket or a wallet.

In an original manner a passive unit 2 of a transponder 3 of the conventional type and known by itself is irremovably associated with the sheet material 1, which transponder also comprises an active read unit 4.

The passive unit 2 will be secured by means of adhesive material or glue onto the paper medium surface or it can be incorporated or concealed thereinto depending on requirements.

In a first embodiment the transponder 3 is a transceiver in which the passive unit 2 is adapted to receive pulses transmitted from the active read unit 3 and to retransmit coded reply signals, in the form of radio waves.

In this first embodiment the passive unit 2 comprises suitable and known micro-components such as an antenna, a chip, a memory, circuit elements among which at least one condenser to store the electric energy produced by induction by the electromagnetic waves striking thereon and sent by the active read unit 4.

In a second embodiment, also known and still more advantageous from an economic point of view as compared with the first embodiment due to the very low price at which it is available on the market, the transponder 3 is a transceiver in which the pulses transmitted from the active read unit and the coded reply signals retransmitted by the passive unit 1 consist of high-frequency sound waves.

In this second embodiment, the passive unit 2 comprises specific and known micro-components among which at least one piezoelectric element and suitable surfaces adapted to reflect the incident sound waves and to modify them so that they can be unequivocally identified.

It will be also recognised that the code contained in the passive unit 2 will not enable identification of the medium's owner.

It is also important to point out that the code contained in the passive unit 2 is not an identification code of the medium and/or the passive unit itself. In other words, reading of the code will not enable the history to be traced or historical information to be obtained as regards the medium containing it.

The promotional and/or advertising system can be provided, in addition to the mentioned transponder system, with a processing unit capable of inputting the code read by the passive unit 2 and comparing it with a plurality of stored codes to establish a correspondence therewith and generate a corresponding output.

The output can be of any nature, of the sound or light type, or can even be in a data format.

For instance and not in a limiting manner, a code correspondence can involve winning of a prize, a discount or a free admittance to a place, or also a promotional action in general, alternatively, the code will activate a promotional function in a computer, TV or radio or other apparatus that will deliver data and news in relation either to a geographic resort or to a cultural, sports or society event.

By way of example, the device in accordance with the invention can be used as a video wall; tickets, cards or gadgets are distributed and a display stand and/or a circuit created in a given place cause the persons travelling over the circuit to activate films, sounds, scents, smells, etc.; possibly the card may also operate a mechanical mechanism such as a mannequin for promotional-advertising purposes.

The invention can also be used in a shop in which a screen installed therein close to or attached to the shop window can be operated by a passer-by in possession of the card, which passer-by may also be out of the shop itself moving the card in a given position and therefore making a video, an audio or a mechanical mechanism start.

The system can also be implemented on credit cards or automatic teller machines, as upon payment a terminal provided with an audio and/or a video will be able to supply information on payment, collecting data and/or the status of the fidelity program combined with the card and also a message of advertising nature.

Obviously the above can also apply to all types of fidelity or membership cards such as those of airlines, railway and shipping companies, hotels, petrol companies, etc.

The invention can also be implemented in cards, brochures, tourist leaflets, booklets combined with a person, bracelets or rings.

The above, when delivered to an individual, give an opportunity to the latter to use screens, TV and radio sets, etc. distributed in a given place (a town, museum, station, information point, for example) in order to obtain information on services, works of art, shows, and are also able to transmit advertising information.

Obviously, uses in several different languages can be provided, i.e. a foreign tourist will have a Card adapted to make information, news and advertising matter start in his/her language.

Also a skipass, upon passage for use of the ski-lifts, chair-lifts, etc. will be able to start an advertising message on a screen/TV and also a plurality of information on the condition of the ski runs, on temperature, snow, etc.

The cards, in addition to starting promotional or advertising messages on a screen will also be able to activate a mechanical advertising form.

For instance in a museum the medium provided with the passive unit will be able to start mechanical mechanisms indicating the path to be followed, etc.

The card containing the passive unit will be also adapted for use in order to purchase a given service via the Internet. Upon the purchase, the central system will associate the code contained in the passive unit with the purchased service (a ticked for the cinema, for example). When the user presents himself/herself to the cinema, a screen or the like will transmit an advertising message in addition to enabling access to the cinema hall.

As a further applicative example, said cards can be also used for prepaid cards; during use for shopping, in addition to money being balanced down, a video can give information on the residual value, the amount spent and promotional or advertising information on different goods.

Should the patented system be implemented on devices such as motorway cards for toll payment, during the operations for payment a voice would give information on the traffic, the weather, etc. and could also deliver messages of promotional/advertising nature. Obviously, the same operation could be obtained with tickets for trains, ships or airlines.

Use of the present system in cards with mechanisms capable of emitting scents could be also very advantageous. In particular it would be possible to have an advertising card of a given brand that on interaction with the active unit will emit the corresponding scent.

The system is also advantageous in cards for holiday villages that on use of same will cause starting, on a screen, of information on a possible residual credit or on the features of the purchased goods or service, as well as starting of promotional actions or advertising messages and of information on the scores of possible competition, lotteries or others.

The invention also offers particular advantages in the game field, The results of a lottery or a "scratch and win" game can be in audio or video format.

In addition all invitation cards to particular event, conferences, meetings, conventions, discotheques provided with this system will enable an interactive entrance combined with advertising and promotional actions, scores and information.

Finally, the cards will be able to operate machines capable of offering a product or a service for advertising, promotional of fidelisation purposes.

For example, with the supermarket card, close to an automatic citrus-fruit squeezer it will be possible to operate the system and offer a fruit juice free of charge to the consumer that, at the same time, will be able to see the characteristics of the product, prices, possible promotional and advertising information, on a video.

The same information could be printed in an automatic manner.

The invention achieves important advantages.

In fact, first of all, the paper medium in accordance with the invention enables a quick and easy identification of the codes associated therewith because reading of said codes takes place automatically and under proximity conditions practically without engaging staff, except for control functions as regards correct operation of the recognition procedure and the obtained results.

In addition, the paper medium in accordance with the invention, due to its feature of minimising possible inconveniences connected with identification of said card can efficiently help in positively modifying the behaviour of the individuals coming into possession of it and therefore in conclusion in improving the advertising or promotional efficiency of the paper medium itself.

Finally, it will be recognised that the addition of an automatic identification system to known paper media for commercial uses only increases the production cost of same to a quite negligible degree.

## Claims

1. A promotional and/or advertising system comprising:
- a card (1) for personal use, made of sheet material such as paper, plastic, imitation leather, said card of sheet material having messages and/or representations of promotional-advertising nature on at least one of the faces (5a, 5b) thereof;
- at least one passive unit (2) containing a code irremovably associated to the card, the card (1) being designed to be carried and used by an owner;
- at least one active read unit (3) capable of interacting with the passive unit (2) under proximity conditions to receive at least said code, following an interrogation;
- a memory associated with the active read unit (3) which contains a predetermined number of main codes; **characterized in that** it further comprises:
- a processing unit capable of inputting said code read on the passive unit (2) by the active read unit (3) and comparing it with at least said predetermined number of main codes to determine a correspondence therewith;
- the processing unit carrying out visual and/or sound and/or olfactory signs and/or moving corresponding mechanical elements associated with the code read, the passive unit containing no identification data of said owner.

2. A system as claimed in claim 1, **characterized in that** the visual and/or sound and/or olfactory signs are of advertising and/or promotional nature

3. A system as claimed in claim 1, **characterized in that** the medium (1) is designed to be carried by a single owner and to be used again by the same or eliminated

4. A system as claimed in claim 1, **characterized in that** said passive unit (2) is part of a transponder system and is adapted to receive pulses transmitted by the active read unit (4) and to retransmit coded reply signals in the form of radio waves.

5. A system as claimed in claim 1, **characterized in that** said passive unit (2) is part of a transponder system and is adapted to receive pulses transmitted by the active read unit (4) and to retransmit coded reply signals in the form of sound waves

6. A system as claimed in anyone of the preceding claims, **characterised in that** said code contained in the passive unit (2) is not an identification code of the medium and/or the passive unit.

7. A system as claimed in claim 1, **characterized in that** said messages and/or representations of promotional-advertising nature indicate the presence in or on the medium of said passive unit (2) designed to interact under proximity conditions with the active read unit (3) put under remote conditions, for instance at shops, commercial stores, discotheques or other places.

8. A system as claimed in anyone of the preceding claims, **characterized in that** the medium (1) Is for private use and not for public use.

## Patentansprüche

1. Werbe- und/oder Anzeigesystem, umfassend:
- eine Karte (1) für die persönliche Nutzung, bestehend aus einem Blattmaterial wie Papier, Kunststoff, Kunstleder, wobei die genannte Karte aus Blattmaterial Werbe-/Anzeigebotschaften oder -darstellungen auf mindestens einer ihrer Seiten (5a, 5b) aufweist;
- mindestens eine passive Einheit (2), umfassend einen fest mit der Karte assoziierten Code, wobei die Karte (1) so ausgelegt ist, dass sie von einem Besitzer getragen und benutzt werden kann;
- mindestens eine aktive Leseeinheit (3), die in der Lage ist, mit der passiven Einheit (2) unter Proximitätsbedingungen zu interagieren, um einer Abfrage folgend mindestens den genannten Code zu empfangen;
- einen Speicher, assoziiert mit der aktiven Leseeinheit (3), der eine vorgegebene Zahl an Hauptcodes umfasst; **dadurch gekennzeichnet, dass** sie zudem umfasst:
- eine Verarbeitungseinheit, die in der Lage ist, den von der aktiven Leseeinheit (3) an der passiven Einheit (2) gelesenen Code einzuspeisen und mit mindestens der genannten vorgegebenen Zahl an Hauptcodes zu vergleichen, um eine Übereinstimmung mit diesen festzulegen;
- die Verarbeitungseinheit führt visuelle und/oder Ton- und/oder Geruchssignale durch und/oder bewegt entsprechende mit dem gelesenen Code verbundene mechanische Elemente, die passive Einheit enthält keine Identifizierungsdaten des genannten Besitzers.

2. System nach Anspruch 1, **dadurch gekennzeichnet, dass** die visuellen und/oder Ton- und/oder Geruchssignale zu Anzeige- und/oder Werbezwecken dienen.

3. System nach Anspruch 1, **dadurch gekennzeichnet, dass** der Support (1) ausgestaltet ist, um von einem einzelnen Besitzer getragen, erneut von diesem verwendet oder beseitigt zu werden.

4. System nach Anspruch 1, **dadurch gekennzeichnet, dass** die genannte passive Einheit (2) Teil eines Transpondersystems ist und so eingerichtet ist, dass sie von der aktiven Leseeinheit (4) gesendete Impulse empfängt und kodierte Antwortsignale in der Form von Funkwellen zurücksendet.

5. System nach Anspruch 1, **dadurch gekennzeichnet, dass** die genannte passive Einheit (2) Teil eines Transpondersystems ist und so eingerichtet ist, dass sie von der aktiven Leseeinheit (4) gesendete Impulse empfängt und kodierte Antwortsignale in der Form von Schallwellen zurücksendet.

6. System nach einem der vorhergehenden Ansprüche, **dadurch gekennzeichnet, dass** der genannte, in der passiven Einheit (2) enthaltene Code kein Identifizierungscode für den Support und/oder die passive Einheit ist.

7. System nach Anspruch 1, **dadurch gekennzeichnet, dass** die genannten, Anzeige-/Werbezwecken dienenden Botschaften und/oder Darstellungen angeben, dass der Support die genannte passive Einheit (2) enthält, ausgelegt zur Wechselwirkung unter Proximitätsbedingungen mit der aktiven Leseeinheit (3), gesetzt unter Fernbedingungen, zum Beispiel in Läden, Geschäften, Diskotheken oder anderen Orten.

8. System nach einem der vorhergehenden Ansprüche, **dadurch gekennzeichnet, dass** der Support (1) der privaten Nutzung und nicht der öffentlichen Nutzung dient.

## Revendications

1. Système de promotion et/ou de publicité comprenant :
- une carte (1) à usage personnel, à base d'un matériau en feuille comme papier, plastique, similicuir, ladite carte de matériau en feuille contenant des messages et/ou des représentations de nature promotionnelle/publicitaire sur au moins l'une de ses faces (5a, 5b) ;
- au moins une unité passive (2) contenant un code associé irrévocablement à la carte, la carte (1) étant conçue pour être portée et utilisée par un titulaire ;
- au moins une unité de lecture active (3) pouvant interagir avec l'unité passive (2) dans des conditions de proximité pour recevoir au moins ledit code, après une interrogation ;
- une mémoire associée à l'unité de lecture active (3) qui contient un nombre prédéterminé de codes principaux ; **caractérisé en ce qu'**il comprend également :
- une unité de traitement pouvant saisir ledit code lu sur l'unité passive (2) par l'unité de lecture active (3) et le comparer à au moins ledit nombre prédéterminé de codes principaux pour établir une correspondance ;
- l'unité de traitement émettant des signaux visuels et/ou sonores et/ou olfactifs et/ou déplaçant des éléments mécaniques associés au code lu, l'unité passive ne contenant aucune donnée d'identification dudit titulaire.

2. Système selon la revendication 1, **caractérisé en ce que** les signaux visuels et/ou sonores et/ou olfactifs sont de nature publicitaire et/ou promotionnelle.

3. Système selon la revendication 1, **caractérisé en ce que** le médium (1) est conçu pour être porté par un seul titulaire et pour être utilisé aussi par ledit titulaire ou pour être éliminé.

4. Système selon la revendication 1, **caractérisé en ce que** ladite unité passive (2) fait partie d'un système répondeur et peut recevoir des impulsions transmises par l'unité de lecture active (4) et retransmettre des signaux de réponse codés sous la forme d'ondes radio.

5. Système selon la revendication 1, **caractérisé en ce que** ladite unité passive (2) fait partie d'un système répondeur et peut recevoir des impulsions transmises par l'unité de lecture active (4) et retransmettre des signaux de réponse codés sous la forme d'ondes sonores.

6. Système selon l'une quelconque des revendications précédentes, **caractérisé en ce que** ledit code contenu dans l'unité passive (2) n'est pas un code d'identification du médium et/ou de l'unité passive.

7. Système selon la revendication 1, **caractérisé en ce que** lesdits messages et/ou lesdites représentations de nature promotionnelle-publicitaire signalent la présence dans ou sur le médium de ladite unité passive (2), conçue pour interagir dans des conditions de proximité avec l'unité de lecture active (3), dans des conditions éloignées, par exemple dans des boutiques, dans des stores commerciaux, dans des discothèques ou dans d'autres endroits.

8. Système selon l'une quelconque des revendications précédentes, **caractérisé en ce que** le médium (1) est à usage privé et non pas à usage public.
